# EUROPEAN PATENT APPLICATION

(11) **EP 1 855 176 A1**
(43) Date of publication of application: **14.11.2007**
(21) Application number: 07380119.3
(22) Date of filing: 03.05.2007
(51) Int. Cl.: G05G 9/08

(54) **A device for the simultaneous actuation of each of several mechanisms through a respective rope**

(30) Priority: 12.05.2006 ES 200601093 U
(71) Applicant: JANE, S.A., 08184 Palau de Plegamans (Barcelona) (ES)
(72) Inventor: Jane Santamaria, Manuel, 08184 Palau Solita i Plegamans Barcelona (ES)
(74) Representative: Pastells Teixido, Manuel

(57) **Abstract**

This device acts on each of two ropes in a mutually opposite sense and is characterised in that for each rope (8 and 9) the device comprises an articulately fitted arm (1 and 2), and the two arms (1 and 2) are arranged in a converging arrangement and thus converge towards their free ends (6 and 7) and are adapted to be simultaneously actuated by a pushbutton (12) being operable for pressing them at said free ends (6 and 7). The pushbutton (12) comprises a spring (15) being fit to biassedly keep it arranged in its passive arrangement and each of the ropes (8 and 9) is secured to the respective free end (6 and 7) of the respective arm (1 and 2), these latter being linked in a pin-jointed connection (3 and 4) to a tubular body (5) with the ropes (8 and 9) extending through its inside. A cowling (13) is arranged on the tubular body (5) and has an opening (14) shiftingly guiding the pushbutton (12) during its actuation.

## Description

### OBJET OF THE INVENTION

A device for the actuation of each of several mechanisms through a respective rope.

### FIELD OF THE INVENTION

This device is designed for simultaneously acting on two ropes thereby actuating them in a mutually opposite sense, one of its main applications being the actuation of locking mechanisms in articulation and/or anchoring devices in the field of prams.

### BACKGROUND OF THE INVENTION

There exist several devices for obtaining the simultaneous actuation of each of two mechanisms through a respective rope, of which devices those being very widely used being those being formed by a rotary disk at diametrically opposite points having secured to it the ends of the two ropes being provided for acting on the corresponding mechanisms, such as in the case of the devices being the object of the Spanish Patent ES-2070071 (9300487) and of the Spanish Utility Model ES-1053703 (200300028).

### SUMMARY OF THE INVENTION

It is the object of this invention a device being provided for the simultaneous actuation of each of two mechanisms through a respective rope and bringing about some improvements on those having been used so far, said improvements consisting in a simplification determining an easier actuation on the user's part, a more compact arrangement facilitating its location on site, and a low manufacturing and assembly cost.

The device is for such a purpose characterised in that it comprises an articulately fitted arm for each rope, both arms being arranged in a converging arrangement and thus converging towards their free ends, each of these latter having a respective rope linked to it, said arms being in a position to be simultaneously actuated by a pushbutton at said free ends.

The pushbutton comprises a spring being fit to biassedly keep it arranged in its passive arrangement.

This device is adapted to be fitted to a tubular body with the ropes extending through its inside, a cowling being arranged on said body and having an opening shiftingly guiding the pushbutton during its actuation.

These and other characterising features will be best made apparent by the following detailed description whose understanding will be made easier by the accompanying sheet of drawings showing a practical embodiment being cited only by way of example not limiting the scope of the present invention.

### DESCRIPTION OF THE DRAWINGS

In the drawings:
Fig. 1 illustrates in an elevational view the main components of the device being the object of the invention;
Figs. 2 and 3 in an elevational section depict the whole device being arranged in its passive and in its active arrangement, respectively; and
Fig. 4 diagrammatically shows in a plan-view the device being fitted to a tubular body also having fitted to it another device of the already known type for the actuation of each of several mechanisms through a respective rope.

### DETAILED DESCRIPTION

According to the drawings the device for the actuation of each of several mechanisms through a respective rope comprises two arms (1) and (2) being each at one of its ends linked in a pin-jointed connection by means of a respective pin (3) and (4) to a tubular body (5), said arms being arranged in a converging arrangement and thus converging towards their free ends (6) and (7), each of these latter having the end of a respective rope (8) and (9) secured to it, each of said ropes extending into the inside of the tubular body (5) through a respective orifice (10) and (11) being provided in it.

These two arms (1) and (2) are simultaneously actuated by the action being exerted by a pushbutton (12) being operable for pressing them at their ends (6) and (7).

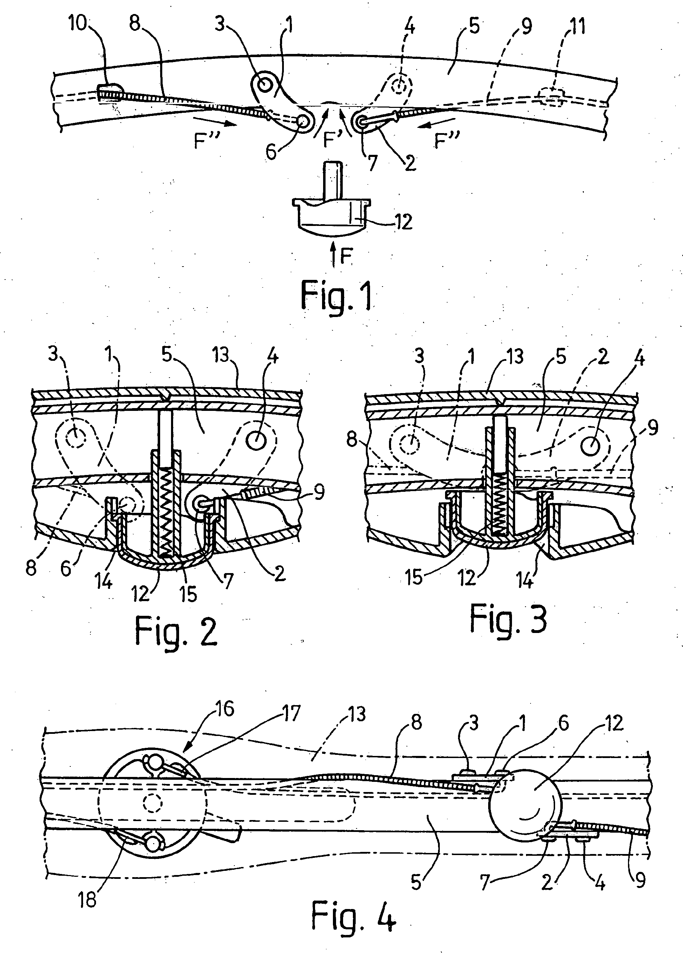

On the tubular body (5) a cowling (13) is fitted which has an opening (14) shiftingly guiding the pushbutton (12) during its actuation (Figs. 2 and 3), this latter in its inside comprising a spring (15) being fit to biassedly keep it arranged in its passive arrangement.

In the case being shown the tubular body (5) makes up the middle length of the handle belonging to a carrycot seat or a carrycot being adapted to be fitted to a pram.

In Fig. 4 another device (16) of an already known type is fitted to the tubular body (5) and also allows to simultaneously actuate two mechanisms being actuated by the ropes (17) and (18).

In this concrete case one of these devices will act on the mechanisms being provided for removably fitting the carrycot seat or carrycot to the pram, and the other device will act to thereby lock the angular arrangement being chosen for the handle being articulately linked to the carrycot seat or carrycot.

In the device being the object of the invention when pressing the pushbutton (12) as per arrow F (Fig. 1) both arms (1) and (2) will be simultaneously pushed at their ends (6) and (7) and will be thus turned around their pins (3) and (4) as per arrows F' thus pulling the ropes (8) and (9) as per arrows F".

Once the action being exerted on the pushbutton (12) has ceased the ropes (8) and (9) will shiftingly move in the opposite sense due to the action of the actual mechanisms to which they are linked, the pushbutton (12) thus regaining its passive position (Fig. 2).

## Claims

1. A device for the actuation of each of several mechanisms through a respective rope by acting on each of two ropes in a mutually opposite sense, **characterised in that** for each rope (8 and 9) the device comprises an articulately fitted arm (1 and 2), the two arms (1 and 2) being arranged in a converging arrangement and thus converging towards their free ends (6 and 7) and being adapted to be simultaneously actuated by a pushbutton (12) being operable for pressing them at said free ends (6 and 7).

2. A device for the actuation of each of several mechanisms through a respective rope, as per claim 1, **characterised in that** the pushbutton (12) comprises a spring (15) being fit to biassedly keep it arranged in its passive arrangement.

3. A device for the actuation of each of several mechanisms through a respective rope, as per claim 1, **characterised in that** each of the ropes (8 and 9) is secured to the respective free end (6 and 7) of the respective arm (1 and 2), these latter being linked in a pin-jointed connection (3 and 4) to a tubular body (5) with the ropes (8 and 9) extending through its inside.

4. A device for the actuation of each of several mechanisms through a respective rope, as per the preceding claims, **characterised in that** a cowling (13) is arranged on the tubular body (5) and has an opening (14) shiftingly guiding the pushbutton (12) during its actuation.
